# EUROPÄISCHE PATENTANMELDUNG

(11) **EP 3 944 753 A1**
(43) Veröffentlichungstag der Anmeldung: **02.02.2022**
(21) Anmeldenummer: 21188802.9
(22) Anmeldetag: 30.07.2021
(51) Int. Cl.: A01G 9/04, B65D 1/36

(54) **MEHRWEGTRANSPORTPALETTE FÜR TOPFPFLANZEN**

(30) Priorität: 31.07.2020 DE 202020104438 U
(71) Anmelder: Blume 2000 Blumen-Handelsgesellschaft mbH, 22848 Norderstedt (DE)
(72) Erfinder: Diederich, Dirk, Norderstedt (DE); Diener, Hans-Uwe, Norderstedt (DE)
(74) Vertreter: Patentanwälte Olbricht Buchhold Keulertz

(57) **Zusammenfassung**

Die Erfindung betrifft ein Mehrwegpalettensystem und eine Transportpalette. Das erfindungsgemäße Mehrwegpalettensystem und die erfindungsgemäße Transportpalette werden zum Transport, zur Lagerung und zur Präsentation von Topfpflanzen verwendet. Das Mehrwegpalettensystem für Topfpflanzen umfasst mindestens zwei voneinander verschiedene Transportpaletten, die aus Kunststoff bestehen, wobei eine Transportpalette eine Grundplatte und mehrere darin angeordneten Einstellfächer hat, die zur Aufnahme einer Topfpflanze dienen.

Die Transportpalette hat eine Grundplatte mit einem umlaufenden Rahmen mit Streben und mehrere in der Grundplatte angeordnete Einstellfächer. Die multifunktionalen Streben der Transportpalette erlauben es verschiedenen Topfgrößen einzusetzen. Ein Vorteil der Transportpalette ist, dass verschiedene Töpfe, von verschiedenen Herstellern und mit verschiedenen Durchmessern, in der erfindungsgemäßen Transportpalette und mit den erfindungsgemäßen Mehrwegpalettensystem transportiert werden können. Gegenüber herkömmlichen Paletten bietet die Transportpalette den weiteren Vorteil, dass höhere Stückzahlen von Topfpflanzen in der Transportpalette möglich sind.

## Beschreibung

Die Erfindung betrifft ein Mehrwegpalettensystem gemäß dem Oberbegriff von Anspruch 1 und eine Transportpalette gemäß dem Oberbegriff von Anspruch 4.

Zimmerpflanzen, Beet- und Balkonpflanzen erfreuen sich großer Beliebtheit. Laut dem Zentralverband Gartenbau (ZVG) wurde in Deutschland im Jahr 2019 mit blühenden Zierpflanzen und Grünpflanzen ein Umsatz von 18 Euro pro Bundesbürger erwirtschaftet. Die Pflanzen werden zum großen Teil in Gartenbaumärkten oder im Blumeneinzelhandel als Einzelpflanzen in Pflanztöpfen angeboten. Die bepflanzten Pflanztöpfe müssen sicher und mit vertretbarem Aufwand transportiert und gelagert werden. Die Pflanzen dürfen beim Transport nicht beschädigt werden, da sie sonst nicht mehr verkauft werden können. Die Pflanzen müssen daher in der Palette einen stabilen Stand haben. Üblicherweise werden hierfür Einwegpaletten aus Kunststoff verwendet, in denen jeweils mehrere Pflanztöpfe gleicher Größe transportiert und gelagert werden können. Die Einwegpaletten werden nach der Benutzung entsorgt und tragen so zum weltweit existierenden Plastikmüllproblem bei.

Um den Plastikmüll, der beim Transport und Verkauf von Topfpflanzen anfällt, zu reduzieren, sind auch Mehrwegsysteme für Pflanzenpaletten bekannt. Bestehende Mehrwegsystem sind teilweise für den Blumeneinzelhandel ungeeignet, da die eingesetzten Paletten in ihren Abmessungen und Konstruktionsformen mit herkömmlichen Präsentationsregalen oder Holzkisten zur Präsentation nicht kompatibel sind. Im Markt existiert zu dem das Problem, dass Pflanztöpfe in ihrer Form und Größe nicht genormt sind und deshalb viele verschiedenen Formen und Größen existieren. Entsprechend weisen bestehende Mehrwegsysteme deshalb verschiedenste Palettengrößen auf, was die Rücknahme, Bevorratung und das Handling erschwert und entsprechend verteuert. Eine solche Mehrwegpalette ist z.B. in der DE 20 2013 101 628 U1 beschrieben.

Die DE 20 2020 100 361 U1 beschreibt eine variable Transportpalette für Pflanztöpfe, die als Mehrwegpalette ausgelegt ist. Die Palette weist mehrere variable Aufnahmefächer auf, in denen Pflanztöpfe verschiedener Größe transportiert werden können. In den Aufnahmefächern ist ein Verstellelement angeordnet, mit dem die Größe des Aufnahmefachs eingestellt werden kann. Zwar lassen sich so verschieden große Pflanztöpfe transportieren. Die Aufnahmefächer müssen aber vor jedem Gebrauch manuell eingestellt werden, was wiederum das Handling aufwendiger macht und zu zusätzlichen Kosten führt.

Aufgabe der Erfindung ist es daher, eine Transportpalette für Topfpflanzen bereitzustellen, die die beschriebenen Probleme überwindet und insbesondere einfach in der Handhabung ist und einen kostengünstigen und mit vertretbarem logistisch Aufwand verbundenen sicheren Transport der Topfpflanzen ermöglicht.

Die Aufgabe wird erfindungsgemäß gelöst durch ein Mehrwegpalettensystem gemäß Anspruch 1. Die Aufgabe wird weiterhin gelöst durch eine Transportpalette gemäß Anspruch 4.

Weitere Ausführungsformen sind Gegenstand der Unteransprüche oder nachfolgend beschrieben.

Das erfindungsgemäße Mehrwegpalettensystem für Topfpflanzen umfasst mindestens zwei voneinander verschiedene Transportpaletten, die aus Kunststoff bestehen, wobei eine Transportpalette eine Grundplatte und mehrere darin angeordneten Einstellfächer hat, die zur Aufnahme einer Topfpflanze dienen, und sich die Transportpaletten in der Größe der Einstellfächer und/oder der Anordnung der Einstellfächer voneinander unterscheiden, so dass Pflanztöpfe mit verschiedenen Topfdurchmessern und verschiedenen Topfhöhen in den verschiedenen Transportpaletten platziert werden können.

Unter einem Mehrwegartikel wird erfindungsgemäß ein Artikel verstanden, der wiederverwendbar ist. Ein Mehrwegartikel wird bestimmungsgemäß nach einem ersten Gebrauch aufbereitet und wiederverwendet, d.h. er wird einem weiteren Gebrauchszyklus zu geführt. Hierdurch ergeben sich andere Anforderungen an die Stabilität, die Konstruktion und das Material des Mehrwegartikels als bei einem Einwegprodukt. Der Artikel muss sowohl nach Gebrauch in größere Stückzahl, bevorzugt gestapelt, transportierbar sein und sich für einen weiteren Gebrauch reinigen lassen. Außerdem muss er erneut befüllbar sein. Bevorzugt trägt er eine Form von Kennzeichnung oder hat eine standardisierte erkennbare Form, die eine Zuordnung zu einem bestimmten Mehrwegsystem erlaubt. Ein Mehrwegartikel erlaubt anders als ein Einwegartikel auf Grund seiner Beschaffenheit eine vielfache Wiederverwendung und eine erneute Befüllung desselben Artikels mit der Ware. Besonders bekannt sind Mehrwegflaschen, die anders als Einwegflaschen gereinigt und erneut befüllt werden können, was bei Einwegflaschen aufgrund ihrer Beschaffenheit nicht möglich ist.

Das erfindungsgemäße Mehrwegpalettensystem umfasst in einer bevorzugten Ausführungsform genau zwei voneinander verschiedene Transportpaletten, die Einstellfächer für Topfpflanzen mit den Topfmaßen 8 cm bis 14cm (Durchmesser 8 cm bis 14 cm) aufweisen, wobei jede Transportpalette Einstellfächer für mindestens zwei verschiedene Topfmaße hat. So weist bevorzugt eine erste Transportpalette Einstellfächer für Topfpflanzen mit einem Topfdurchmesser von 8 cm bis 11 cm auf und eine zweite Einstellpalette Einstellfächer für Topfpflanzen mit einem Topfdurchmesser von 12 cm bis 14 cm.

Die Transportpalette des erfindungsgemäßen Mehrwegpalettensystems ist bevorzugt spritzgegossen, d.h. im Spritzgussverfahren hergestellt.

Die erfindungsgemäße Transportpalette zum Transport von Topfpflanzen besteht aus Kunststoff. Die erfindungsgemäße Transportpalette hat eine Grundplatte mit einem umlaufenden Rahmen und mehrere in der Grundplatte angeordnete Einstellfächer, die auch als Nester bezeichnet werden. Die Einstellfächer dienen zur Aufnahme der Topfpflanzen in der Palette. Die Einstellfächer weisen gleiche oder verschiedene Durchmesser und Abmessungen auf. Jedes Einstellfach hat einen Boden und eine Wandung, die sich von der Grundplatte zum Boden erstreckt und Grundplatte und Boden miteinander verbindet. Die erfindungsgemäße Transportpalette ist ein Mehrwegartikel. In einer Ausführungsform weist die Grundplatte einen umlaufenden Rahmen auf, der in der waagerechten Ebene durch den Rand der Grundplatte und bevorzugt durch einen an die Grundplatte angelenkten Verstärkungsrand gebildet wird. Der Verstärkungsrand ist etwa im rechten Winkel an die Grundplatte angelenkt und erstreckt sich von der Grundplatte in Richtung Boden. Der Verstärkungsrand erstreckt sich bevorzugt über den gesamten umlaufenden Rahmen. Durch den Verstärkungsrand wird die Stabilität der Transportpalette insbesondere hinsichtlich der Verwindungssteifigkeit erhöht.

Die Einstellfächer haben einen kreisförmigen Querschnitt und verjüngen sich entweder nach unten konisch oder sind zylindrisch, bevorzugt verjüngen sie sich nach unten konisch. Bevorzugt weisen die Einstellfächer an ihrem oberen Ende einen Fassungsrand auf, der mit der Grundplatte verbunden ist, bevorzugt aus der Grundplatte nach unten ausgestülpt ist. Der Fassungsrand umgibt das Einstellfach zumindest teilweise und dient sowohl der Stabilisierung als auch als Hilfe bei der Platzierung der Topfpflanze im Einstellfach.

Die zumindest teilweise umlaufende Wandung eines Einstellfachs ist aus mindestens drei Wandstreben gebildet, die jeweils Boden und Grundplatte bzw. Boden und Fassungsrand miteinander verbinden. Der Boden des Einstellfachs ist aus mehreren Bodenstreben gebildet, die waagerecht und bevorzugt parallel zur Grundplatte verlaufen, wobei die Streben bevorzugt mindestens einen Schnittpunkt oder Verbindungspunkt untereinander aufweisen. Bevorzugt besteht der Boden nur aus den Bodenstreben und ggf. einem umlaufenden Rand, der die Bodenstreben verbindet.

Die Transportpalette weist in jedem Eckbereich ein Eckeinstellfach auf, das einen teilweise umlaufende Fassungsrand und mindestens drei Wandstreben hat, wobei der Fassungsrand die kreisförmige Öffnung an der Oberseite des Eckeinstellfachs zu mindestens 2/3 des Umfangs der kreisförmigen Öffnung umgibt, bevorzugt zu mehr als ¾ des Umfangs der kreisförmigen Öffnung. Zwischen zwei Eckeinstellfächern ist immer mindestens ein Seiteneinstellfach angeordnet und mindestens ein zentrales Einstellfach ist in der Mitte der Transportpalette zwischen den Seiteneinstellfächern angeordnet. Die Transportpalette weist bevorzugt vier verschiedene Formen Einstellfächer auf, nämlich Eckeinstellfach, erstes Seiteneinstellfach, zweites Seiteneinstellfach und zentrales Einstellfach. Die Wandstreben sind bevorzugt flexibel und geben beim Einsetzen der Topfpflanzen nach. Die Wandung der Einstellfächer wird bevorzugt ausschließlich durch die Wandstreben gebildet. Die Wandstreben sind unterschiedlich breit ausgebildet, wobei die Breite der Funktion und Position angepasst ist, um eine ausreichende Festigkeit und Stabilität der Transportpalette zu erreichen. In ihrer einfachsten Form sind die Wandstreben streifenförmig ausgebildet, die Wandstreben sind aber z.B. auch Y-förmig oder V-förmig ausgebildet.

Das erfindungsgemäße Mehrwegpalettensystem und die erfindungsgemäße Transportpalette werden zum Transport, zur Lagerung und zur Präsentation von Topfpflanzen verwendet. Unter Topfpflanze wird ein mit einer Pflanze bepflanzter Pflanztopf verstanden, d.h. der Begriff Topfpflanze umfasst erfindungsgemäß das Pflanzgefäß in Form des Topfs und die darin angeordnete Pflanze. Die Pflanztöpfe haben einen kreisförmigen Boden und eine zylindrische oder kegelstumpfförmige Form.

Die vier Eckeinstellfächer (Außennester) an den Ecken verleihen der erfindungsgemäßen Transportpalette eine hohe Gesamtstabilität.

In einer Ausführungsform weist die erfindungsgemäße Transportpalette an ihren Kurzseiten jeweils ein erstes Seiteneinstellfach auf, das zwischen den beiden Eckeinstellfächern angeordnet ist und einen halbkreisförmig umlaufenden Fassungsrand hat, der zum Außenrand der Grundplatte orientiert ist. Das erste Seiteneinstellfach ist zur Mitte der Grundpalette gerichtet zum zentralen Einstellfach geöffnet.

Bevorzugt weist die erfindungsgemäße Transportpalette an ihren Längsseiten jeweils ein zweites Seiteneinstellfach auf, das zwischen den beiden Eckeinstellfächern angeordnet ist und sich in seiner Form von dem ersten Seiteneinstellfach unterscheidet, wobei
- das zweite Seiteneinstellfach einen Boden hat, der in seiner Form drei einander überlagernden Kreisen entspricht, wobei die Mittelpunkte der Kreise auf einer Geraden liegen, die parallel zum Längsseitenrand der Grundpalette verläuft,
- das zweite Seiteneinstellfach im Bereich der beiden äußeren Kreise einen zumindest halbkreisförmig umlaufenden Fassungsrand hat, der jeweils zum benachbarten Eckeinstellfach orientiert ist und
- das zweite Seiteneinstellfach mindestens zwei Standstreben aufweist, die auf der zur Mitte orientierten Seite des Seiteneinstellfachs jeweils auf dem Kreisradius der sich überlagernden Kreise im Schnittpunkt zweier Kreise und/oder unmittelbar benachbart zu diesem Schnittpunkt angeordnet sind, wobei eine Standstrebe vom Boden zu einer Oberseite verläuft und die Oberseite bevorzugt eine Verbindungsplatte ist, die ein Flächenelement in einer Ebene parallel zum Boden ist, bevorzugt in einer Ebene mit der Grundplatte ist.

In einer bevorzugten Ausführungsform weist das zweite Seiteneinstellfach vier Standstreben auf, wobei jeweils zwei Standstreben über eine Verbindungsplatte miteinander verbunden sind. Die nach obenstehenden Standstreben in der Mitte dienen insbesondere der Halterung der Topfpflanzen in der Mitte der Transportpalette.

Im Mittelbereich der Grundplatte der erfindungsgemäßen Transportpalette ist bevorzugt ein Mitteleinstellfach, als zentrales Einstellfach, angeordnet, das die beiden ersten Seiteneinstellfächer miteinander verbindet. Besonders bevorzugt verbindet das Mitteleinstellfach die beiden ersten Seitenfächer und die beiden zweiten Seitenfächer miteinander und ist zu allen vier Seiteneinstellfächern geöffnet, d.h. es befindet sich keine geschlossene Wandung und keine Wandstrebe zwischen Mitteleinstellfach und Seitenfach.

In einer Ausführungsform wird der Boden des Mitteleinstellfachs von mehreren Bodenstreben gebildet. Die mittlere Bodenstrebe verläuft dabei bevorzugt auf der Mittelachse des Mitteleinstellfachs, besonders bevorzugt auf der Mittelachse der Grundplatte, und die Querstreben des Mitteleinstellfachs verlaufen besonders bevorzugt in einem Winkel von 45° bis 90° zur Mittelachse und sind mit der Mittelstrebe verbunden.

Bevorzugt haben die vier Einstellfächer in den Eckbereichen alle den gleichen Durchmesser.

Der Boden der Einstellfächer ist bevorzugt in den Eckeinstellfächern durch mindestens zwei miteinander verbundene Streben gebildet, besonders bevorzugt durch mindestens 4 sternförmig angeordnete Streben, wobei der Verbindungspunkt der Streben dem Mittelpunkt des kreisförmigen Bodens entspricht.

In einer Ausführungsform weisen die Eckeinstellfächer, d.h. die Einstellfächer in den Eckbereichen, einen umlaufenden Rand am Boden des Einstellfachs mit kreisförmigem Umfang auf, der mit den Bodenstreben und den Wandstreben verbunden ist und somit Boden- und Wandstreben miteinander verbindet. Der umlaufende Rand am Boden dient zur Erhöhung der Stabilität und als Verbindungspunkt für die Wandstreben mit den Bodenstreben. In einer alternativen Ausführungsform weisen die Eckeinstellfächer keinen umlaufenden Bodenrand auf. Bei dieser Ausführungsform ist eine Wandstrebe immer mit einer Bodenstrebe verbunden, wobei die Bodenstrebe die Fortsetzung der Wandstrebe bildet. Das Einstellfach wird in diesem Falle aus mehreren miteinander verbundenen Streben gebildet, so dass ein korbartiges Gebilde entsteht. Alternativ kann der umlaufende Bodenrand auch nur teilweise den Boden umgeben, d.h. nur teilweise als umlaufender Rand um den Boden ausgestaltet sein.

Da der Boden der Einstellfächer der erfindungsgemäßen Transportpalette aus Streben besteht, ist er nach unten geöffnet, so dass Gießwasser abfließen kann. Hierdurch wird Staunässe vermieden und die erfindungsgemäße Transportpalette kann auch zur Präsentation und zur Lagerung von Topfpflanzen verwendet werden. Durch die Strebenkonstruktion von Wand und Boden wird außerdem Material bei der Herstellung und entsprechend Gewicht eingespart. Die Transportpalette weist durch die Streben auch weniger Fläche auf, die verschmutzt wird und vor einer Wiederverwendung ggf. gereinigt werden muss.

Die erfindungsgemäße Transportpalette besteht aus Kunststoff und ist spritzgegossen, d.h. im Spritzgussverfahren hergestellt. Die Transportpalette wird im Spritzguss hergestellt und besteht vollständig aus einem Material. Als Material eignet sich z.B. PE-Recyclinggranulat oder PE-Neugranulat. Die Konstruktion der Transportpalette ist mit den Streben so beschaffen, dass eine Herstellung im Spritzguss möglich ist. Das Material ist entsprechend so gewählt sein, dass es sich beim Spritzgießen gleichmäßig im Spritzguss-Werkzeug verteilt. Das Material ist so gewählt sein, dass die Konstruktion nicht zu weich ist und sich durchbiegt, da sie dann nicht zum Transport der Pflanzen geeignet wäre. Wenn das verwendete Material zu hart ist, würde die Transportpalette zu spröde und daher brüchig. Auch würden sich die Pflanzen nicht entnehmen lassen, da die Töpfe auf Grund der mangelnden Elastizität zu stark fixiert sind.

Die erfindungsgemäße Transportpalette wird bevorzugt im erfindungsgemäßen Mehrwegpalettensystem eingesetzt. Die erfindungsgemäße Transportpalette lässt sich entsprechend für die Wiederverwendung aufbereiten. Erfindungsgemäß werden die Transportpaletten nach der Verwendung gestapelt und zurück zur Aufbereitung oder Wiederverwendung transportiert. Verschmutzt abgegebenen Transportpaletten werden gewaschen, einer Qualitätskontrolle unterzogen und in Leergutlagern für die nächste Wiederverwendung aufbewahrt. Bevorzugt ist eine automatisierte Handhabung wie z.B. eine automatisierte Wäsche möglich.

Durch die Benutzung der erfindungsgemäßen Transportpalette in einem Mehrwegsystem lassen sich mittelfristig über 1 Mio. Einwegpaletten pro Jahr einsparen. Hierdurch wird die entstehende Menge an Plastikmüll im Blumeneinzelhandel bzw. Gartenmarkt deutlich reduziert.

Die erfindungsgemäßen Transportpaletten haben eine rechteckförmige Grundplatte. Die Grundplatte hat optional eine oder mehrere abgerundete Ecken. Die Abmessung sind so gestaltet, dass die Transportpalette auf im Gartenbaumarkt und Blumeneinzelhandel übliche Transportwagen und/oder eine handelsübliche Palette optimal positioniert werden kann. Bei dem im Gartenbau häufig anzutreffenden CC-Wagen sind z.B. die Größen der Transportpalette von 270 x 400 mm² geeignet.

Die erfindungsgemäße Transportpalette ist auf Grund ihrer Größe kompatibel mit üblichen im Handel zur Präsentation der Topfpflanzen verwendeten Holzkisten oder Präsentationsregalen. Es ist daher möglich die Transportpalette direkt in die Holzkiste bzw. in oder auf das Präsentationsregal zu stellen, ohne die Topfpflanzen zu entnehmen. Dieses erleichtert die Handhabung und vermindert Beschädigung der Topfpflanzen, die durch häufiges Umstellen oder unsachgemäße Positionierung entstehen können. In der Transportvorrichtung haben die Topfpflanzen durch die Anordnung der Einstellfächer zueinander und die Wahl der Einstellfächer bei der Bestückung immer einen ausreichenden Abstand zueinander.

Die erfindungsgemäße Transportpalette ist durch ihre stabile Konstruktion und das verwendete Kunststoffmaterial extrem haltbar gegen Bruch, Frost, UV-Strahlung und Hitze. Durch die erfindungsgemäße Konstruktion hält die erfindungsgemäß Transportplatte mindesten 10 Durchläufe. Erfahrungsgemäß wird die Lebensdauer im Mehrwegsystem um ein Vielfaches übertroffen.

Die erfindungsgemäße Transportpalette ist bevorzugt einstückig ausgebildet, d.h. sie ist aus einem Kunststoffteil gebildet und hat einen einteiligen Korpus. Sie weist bevorzugt keine Anbauteile und keine zu montierenden Bauteile auf.

Die erfindungsgemäße Transportpalette eignet sich für die Topf-Maße 8 cm bis 14 cm, bevorzugt 9 bis 11 cm. Entsprechend können Pflanztöpfe mit einem kreisförmigen Boden und einem Topfdurchmesser von 8 cm, 9 cm, 10, 5 cm oder 11 cm oder auch 12 cm oder 14 cm in die Transportpalette gestellt werden. Eine Besonderheit ist die, dass es sich um eine Mehrwegpalette handelt, die die vorher in Gebrauch befindlichen Einwegpaletten ablöst. Im Unterschied zu bereits bestehenden Mehrwegpaletten sind die erfindungsgemäßen Transportpaletten nicht nur für eine Topfgröße passend, sondern es passen verschiedene Topfgrößen und verschieden viele Topfeinheiten in die Transportpalette. Dieses ist besonders wichtig, da Pflanztöpfe nicht genormt sind. Ein "9 cm-Topf" kann von einem Hersteller einen Durchmesser von 9,3 cm haben und von einem anderen Hersteller einen Durchmesser von 9,5 cm. Dennoch müssen beide in dieselbe Palette für 9 cm-Töpfe passen.

Ein Vorteil der erfindungsgemäßen Transportpalette ist, dass verschiedene Töpfe, von verschiedenen Herstellern und/oder mit verschiedenen Durchmessern, in der erfindungsgemäßen Transportpalette und mit den erfindungsgemäßen Mehrwegpalettensystem transportiert werden können. Die multifunktionalen Streben der Transportpalette erlauben es verschiedenen Topfgrößen einzusetzen.

Die erfindungsgemäße Transportpalette wird bei identischer Palettengröße und Ausgestaltung je nach Topfgröße mit einer unterschiedlichen Anzahl Topfpflanzen bestückt abhängig von der Größe. Bei 11 Töpfen werden z.B. 6 Stück in der Palette platziert, vier in den Außennestern und zwei in der Mitte. Bei 9 am-Töpfen werden z.B. 12 Stück in der Palette platziert.

Gegenüber herkömmlichen Paletten bietet die erfindungsgemäße Transportpalette den weiteren Vorteil, dass höhere Stückzahlen von Topfpflanzen in der Transportpalette möglich sind. Dadurch, dass die Töpfe versetzt auf Lücke angeordnet werden, ist eine dichtere Packung möglich. Die Einstellfächer im Mittelbereich erlauben eine flexible Nutzung abhängig von der jeweiligen Topfgröße.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine erfindungsgemäße Transportpalette in einer perspektivischen Ansicht,
Fig. 2 die erfindungsgemäße Transportpalette aus Figur 1 in einer Draufsicht,
Fig. 3 eine Schnittzeichnung durch die Palette aus Fig. 1,
Fig. 4 eine mit Pflanztöpfen bestückte Transportpalette,
Fig. 5 eine alternative bestückte Transportpalette und
Fig. 6 eine weitere alternative bestückte Transportpalette.

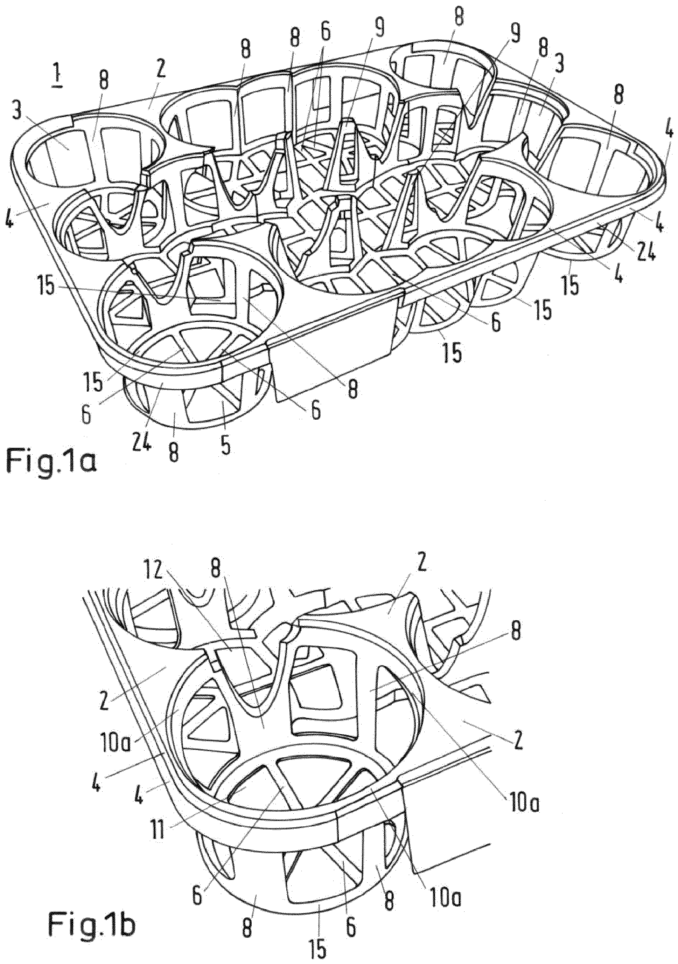

Figur 1a zeigt eine Ausführungsform einer erfindungsgemäßen Transportpalette 1 in einer perspektivischen Ansicht. Die Transportpalette 1 weist eine Grundplatte 2 auf, die eine rechteckige Form mit abgerundeten Ecken hat. In der Grundplatte sind insgesamt neun Einstellfächer angeordnet, die abhängig von ihrer Position unterschiedlich ausgestaltet sind. Die Grundplatte 2 weist einen umlaufenden Rahmen 4 auf, der bei dieser Ausführungsform in der waagerechten Ebene durch den Rand der Grundplatte 2 und durch einen an die Grundplatte 2 angelenkten Verstärkungsrand 24 gebildet wird. Der Verstärkungsrand 24 ist etwa im rechten Winkel an die Grundplatte angelenkt und erstreckt sich von der Grundplatte 2 in Richtung Boden. Jedes Einstellfach hat einen Boden 5, der aus mehreren Bodenstreben 6 gebildet wird. Die Bodenstreben 6 verlaufen waagerecht und sind in einer Ebene parallel zur Grundplatte angeordnet. Der Boden hat an seiner Außenseite einen umlaufenden Rand 15, der mit den Bodenstreben 5 verbunden ist. Die Wandung der Einstellfächer wird durch mehrere Wandstreben 8 gebildet, die sich von der Grundplatte zum Boden erstrecken und Grundplatte und Boden 5 miteinander verbinden. Bei dieser Ausführungsform sind die Wandstreben 8 mit dem umlaufenden Bodenrand 15 verbunden. Die Breite und Stärke der Wandstrebe 8 hängt von Ihrer jeweiligen Position ab. In der Mitte weist die Transportpalette 1 vier einzelnstehende Standstreben 9 auf, die sowohl das mittleere zentrale Einstellfach begrenzen, als auch einen Teil der Wandung der beiden zweiten Einstellfächer bilden.

Fig. 1b zeigt einen vergrößerten Ausschnitt von Figur 1a im Bereich eines Eckeinstellfachs 11. Das Eckeinstellfach 11 weist einen aus sechs Bodenstreben 6 gebildeten Boden auf. Die Bodensterben sind sternförmige angeordnet und haben in der Mitte des Bodens einen Verbindungspunkt. Die Bodenstreben 6 sind an ihrer Außenseite mit dem umlaufenden Bodenrand 15 verbunden. Der umlaufende Bodenrand 15 ist kreisförmiger Rand um den Boden ausgebildet. Vom Bodenrand 15 erstrecken sich mehrere Wandstreben 8 nach oben zur Grundplatte, die die Wandung des Eckeinstellfachs 11 bilden. Die Wandstreben 8 münden oben in einem Fassungsrand 10, der als umlaufender Rand kreisförmig ausgebildet ist. Der Fassungsrand ist hier kein Vollkreis, sondern ist in Richtung zum ersten Seiteneinstellfach 12 geöffnet. Die Wandstrebe im geöffneten Bereich ist Y-förmig ausgebildet und öffnet sich nach oben. Der Fassungsrand 10 wird teilweise aus der Grundplatte 2 und in dieser Ausführung aus einem nach unten gestülpten Rand 10a der Öffnung in der Grundplatte 2 gebildet. Durch die Konstruktion aus Bodenstreben und Wandstreben und dem umlaufenden Bodenrand ist das Einstellfach als offenes Körbchen ausgebildet.

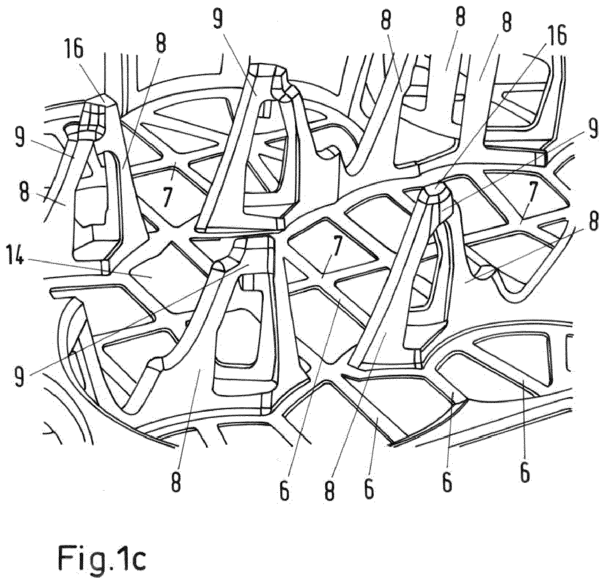

Fig. 1c, zeigt einen vergrößerten Ausschnitt aus Fig. 1a aus dem Bereich des zentralen Einstellfachs 14. In der Mitte sind vier Standstreben 9 zu erkennen, die das zentrale Einstellfach 4 umgeben. Die Standstreben 9 sind jeweils aus zwei Wandstreben 8 gebildet, die vom Boden schräg nach oben laufen und unterhalb der Verbindungsplatte 16 zusammenlaufen. Im oberen Bereich direkt unterhalb der Verbindungsplatte 2 sind die Wandstreben 8 zu einer Strebe verbunden. Die Verbindungsplatte kann in einer Ebene mit der Grundplatte liegen, sie ist im Bereich der Standstreben nur als sehr kleine Fläche ausgebildet. Gut zu erkennen sind hier auch mehrere verschiedene Verbindungspunkte 7 der Bodenstreben 6 untereinander.

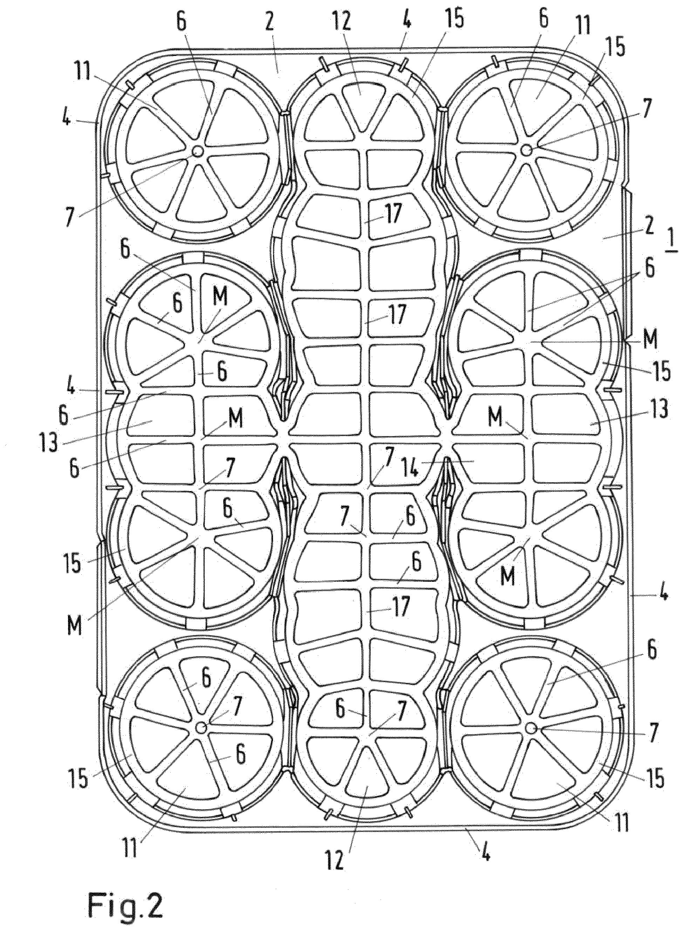

Figur 2 zeigt eine Draufsicht auf die erfindungsgemäße Transportpalette 1 aus Figur 1a. Die Transportpalette 1 weist eine Grundplatte 2 auf, in der neun Einstellfächer angeordnet sind. In den Ecken vier Ecken befindet sich jeweils ein Eckeinstellfach 11. Ein Eckeinstellfach 11 hat einen Boden, der aus 6 sternförmig angeordneten Bodenstreben 6 und einem mit den Bodenstreben 6 verbundenen umlaufendem Bodenrand 15 gebildet wird. Das Eckeinstellfach ist als Mulde mit kreisförmigen Grundriss ausgebildet und öffnet sich nur an einer Seite zum ersten Seiteneinstellfach 12. Die Grundplatte umschließt das Eckeinstellfach daher fast vollständig, wie bei einer herkömmlichen Transportpalette für Topfpflanzen. Die ersten Seiteneinstellfächer 12 sind entlang der Kurzseite zwischen den Eckeinstellfächern angeordnet.

Die ersten Seiteneinstellfächer 12 weisen jeweils fünf sternförmig angeordnete Bodensterben 6 und einen teilweise umlaufenden Bodenrand 15 auf. Die ersten Einstellfächer öffnen sich in dem zur Mitte gerichteten Bereich jeweils vollständig zum zentralen Einstellfach. Entsprechend, befinden sich im Bereich zwischen ersten Einstellfach und benachbartem zentralen Einstellfach keine Wandstreben. An der Längsseite ist zwischen zwei Eckeinstellfächern 11 jeweils ein zweites Seiteneinstellfach 13 angeordnet. Das zweite Seiteneinstellfach 13 weist eine Bodenfläche auf, die aus drei einander überlagernden Kreisen gebildet wird. Die Mittelpunkte der drei Kreise liegen auf einer Geraden, der Mittelachse, die parallel zum Längsseitenrand der Grundplatte verläuft. Entsprechend hat der mittlere Kreis eine Schnittmenge mit den beiden äußeren Kreisen, während sich die beiden äußeren Kreise nicht berühren. Die mittleren Bodenstreben 6 verlaufen auf der Mittelachse der drei Kreise. In den beiden äußeren Kreisen sind die jeweils sechs Bodenstreben 6 sternförmig angeordnet und teilweise, außer im Schnittbereich zum benachbarten Kreis, von einem Bodenrand 15 umgeben. Der Bodenrand 15 verläuft um die gesamte äußere Bodenlinie des zweiten Einstellfachs und umgibt den Boden des Einstellfachs vollständig. Im Bereich des mittleren Kreises sind vier Bodenstreben 6 kreuzförmig angeordnet. Das zweite Seiteneinstellfach 13 im Bereich der beiden äußeren Kreise einen kreisförmig umlaufenden Fassungsrand 10, der jeweils zum benachbarten Eckeinstellfach orientiert ist. Der Fassungsrand 10 umgibt jeweils die äußeren Kreise bis zum Schnittpunkt mit dem mittleren Kreis. Zur Mitte weisen das zweite Seiteneinstellfach 13 mindestens zwei Standstreben 9 auf, die auf der zur Mitte orientierten Seite des Seiteneinstellfachs 13 jeweils auf dem Kreisradius der sich überlagernden Kreise im Schnittpunkt zweier Kreise angeordnet sind.

Das Mitteleinstellfach 14 verbindet die beiden ersten Seitenfächer 12 und die beiden zweiten Seitenfächer 13 mit einander und ist selbst zu allen vier Seiteneinstellfächern geöffnet, d.h. im Grenzbereich zwischen Mitteleinstellfach und Seiteneinstellfach ist zumindest teilweise keine Wandung vorhanden. Der Boden 5 des Mitteleinstellfachs 14 wird von mehreren Bodenstreben 6 gebildet. Die mittlere Bodenstrebe 17 verläuft auf der Mittelachse des Mitteleinstellfachs 14, die hier der Mittelachse der Grundplatte 2 entspricht. Die Querstreben des Bodens des Mitteleinstellfachs verlaufen überwiegend im rechten Winkel zur Mittelachse und sind mit der Mittelstrebe 17 verbunden. Lediglich die letzten Querstreben vor dem Übergang zum Seiteneinstellfach verlaufen in einem spitzeren Winkel.

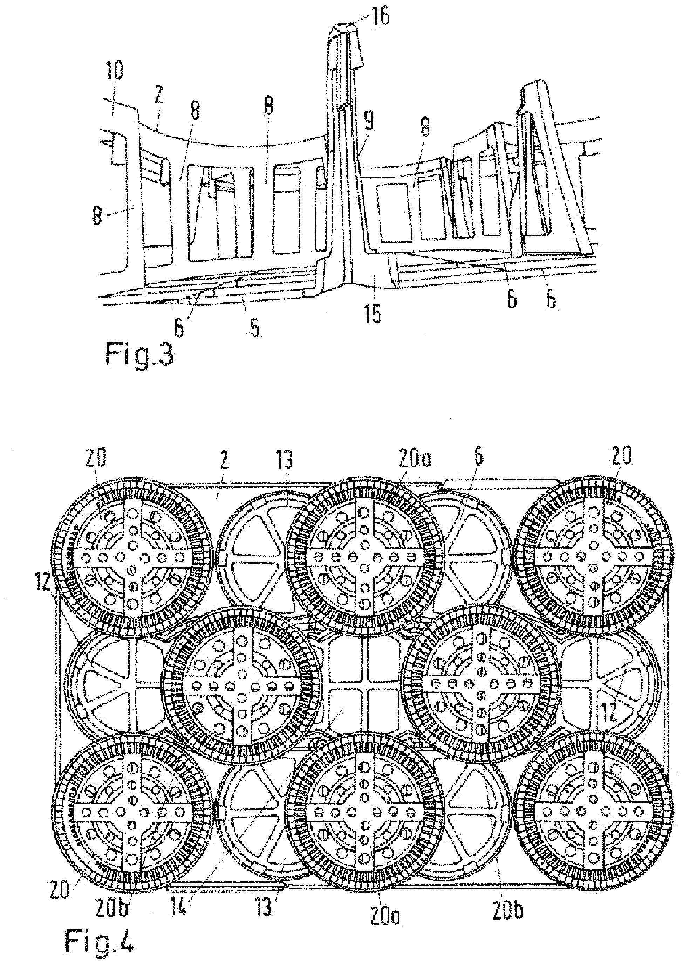

Figur 3 zeigt einen Schnitt durch die Transportpalette aus Figur 2 entlang der Schnittlinie C-C durch eine Standstrebe 9. Es ist der Verlauf der Wandstreben zwischen Boden und Grundplatte zu erkennen. Die Wandstreben sind hier mit dem Fassungsrand 10 und dem umlaufenden Bodenrand 15 verbunden.

Figur 4 zeigt beispielhaft eine Bestückung der erfindungsgemäßen Transportpalette 1 mit acht Pflanztöpfen 20. Die Pflanztöpfe haben einen Durchmesser von 10, 5 cm. Vier der Pflanztöpfe 20 sind in den Eckeinstellfächern platziert. Jeweils eine Pflanztopf 20a ist jeweils mittig im zweiten Seiteneinstellfach 13 platziert, wobei der Rest des Seiteneinstellfachs frei bleibt. Zwei weitere Pflanztöpfe 20b sind im mittleren Einstellfach an den Seiten platziert. Die beiden ersten Seiteneinstellfächer 12 bleiben frei. Durch die gleichmäßige Verteilung der Pflanztöpfe wird eine gute Gewichtsverteilung und ein ausreichender Abstand zwischen den in den Pflanztöpfen befindlichen Pflanzen erreicht.

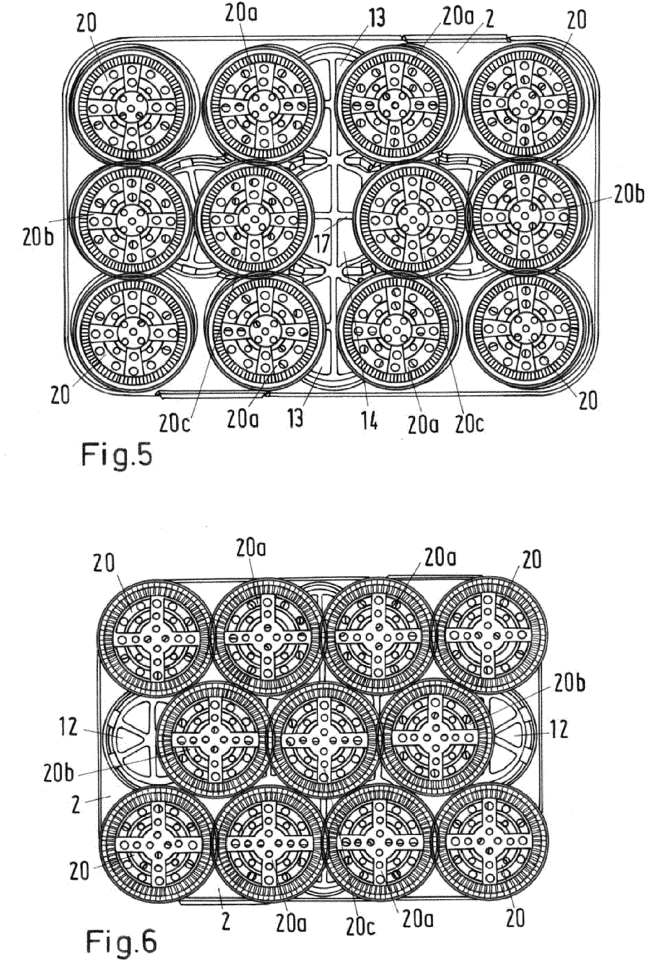

Figur 5 zeigt beispielhaft eine Bestückung der erfindungsgemäßen Transportpalette 1 mit zwölf Pflanztöpfen 20. Die Pflanztöpfe haben einen Durchmesser von 9 cm. Vier der Pflanztöpfe 20 sind in den vier Eckeinstellfächern platziert. Jeweils zwei Pflanztopf 20a sind pro zweiten Seiteneinstellfach 13 platziert, jeweils in den beiden äußeren Kreisflächen des Seiteneinstellfachs. Zwei weitere Pflanztöpfe 20b sind im ersten Seiteneinstellfach platziert. Im mittleren Einstellfach 14 sind jeweils auf etwa gleicher Höhe mit den Pflanztöpfen 20a im zweiten Seiteneinstellfach zwei weitere Pflanztöpfe 20c eingestellt. Das zentrale Fach in der Mitte des mittleren Einstellbereichs 14 bleibt frei. Die Pflanztöpfe sind somit in vier Reihen a 3 Töpfen angeordnet.

Figur 6 zeigt beispielhaft eine Bestückung der erfindungsgemäßen Transportpalette 1 mit elf Pflanztöpfen 20. Die Pflanztöpfe haben einen Durchmesser von 10,5 cm. Vier der Pflanztöpfe 20 sind in den vier Eckeinstellfächern platziert. Jeweils zwei Pflanztopf 20a sind pro zweiten Seiteneinstellfach 13 platziert, jeweils in den beiden äußeren Kreisflächen des Seiteneinstellfachs. Zwei weitere Pflanztöpfe 20b sind im mittleren Einstellfach an den Seiten platziert. Die beiden ersten Seiteneinstellfächer 12 bleiben frei. Ein weitere Pflanztopf 20c ist im zentralen Fach in der Mitte des mittleren Einstellbereichs 14 platziert. Die Pflanztöpfe sind somit in drei Reihen mit vier oder drei Töpfen angeordnet.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- Transportpalette: 1
- Grundplatte: 2
- Einstellfach: 3
- umlaufender Rahmen: 4
- Boden: 5
- Bodenstrebe: 6
- Schnittpunkt oder Verbindungspunkt Streben: 7
- Wandstrebe: 8
- Standstrebe: 9
- Fassungsrand: 10
- Eckeinstellfach: 11
- erstes Seiteneinstellfach: 12
- zweites Seiteneinstellfach: 13
- zentrales Einstellfach: 14
- Umlaufende Rand Boden: 15
- Verbindungsplatte: 16
- Mittelstrebe: 17
- Pflanztopf: 20
- Mittelpunkte der Kreise: M

## Patentansprüche

1. Mehrwegpalettensystem für Topfpflanzen umfassend mindestens zwei voneinander verschiedene Transportpaletten, die aus Kunststoff bestehen, wobei eine Transportpalette (1) eine Grundplatte (2) und mehreren darin angeordneten Einstellfächer (3) hat, die zur Aufnahme einer Topfpflanze dienen, und sich die Transportpaletten in der Größe und/oder Anordnung der Einstellfächer voneinander unterscheiden, so dass Pflanztöpfe mit verschiedenen Topfdurchmessern und verschiedenen Topfhöhen in den verschieden Transportpaletten platziert werden können.

2. Mehrwegpalettensystem gemäß Anspruch 1, **dadurch gekennzeichnet, dass** das Mehrwegsystem genau zwei voneinander verschiedene Transportpaletten umfasst, die Einstellfächer für Topfpflanzen mit den Topfmaßen 9 cm bis 14cm aufweisen, wobei jede Transportpalette Einstellfächer für mindestens zwei verschiedene Topfmaße hat.

3. Mehrwegpalettensystem gemäß Anspruch 1 oder 2, **dadurch gekennzeichnet, dass** die Transportpalette spritzgegossen ist, d.h. im Spritzgussverfahren hergestellt ist.

4. Transportpalette (1) zum Transport von Topfpflanzen, wobei die Transportpalette (1) aus Kunststoff besteht und eine Grundplatte (2) mit einem umlaufenden Rahmen (4) und mehre in der Grundplatte angeordnete Einstellfächer (3) hat, jedes Einstellfach (3) einen Boden (5) und eine Wandung aufweist, die sich von der Grundplatte (2) zum Boden (5) erstreckt und Grundplatte (2) und Boden (5) miteinander verbindet, wobei die Transportpalette (1) ein Mehrwegartikel ist, **dadurch gekennzeichnet, dass**
- die Einstellfächer (3, 11, 12, 13, 14) zumindest teilweise einen kreisförmigen Querschnitt haben und sich entweder nach unten konisch verjüngen oder zylindrisch sind,
- die Einstellfächer (3, 11, 12, 13, 14) an ihrem oberen Ende (9) bevorzugt einen Fassungsrand (10) aufweisen, der mit der Grundplatte (2) verbunden ist,
- die zumindest teilweise umlaufende Wandung eines Einstellfachs aus mindestens drei Wandstreben (8) gebildet wird, die jeweils Boden (5) und Grundplatte (2) miteinander verbinden,
- der Boden der Einstellfächer aus mehreren Bodenstreben (6) gebildet ist, die bevorzugt parallel zur Grundplatte (2) verlaufen und die Bodenstreben (6) bevorzugt mindestens einen Schnittpunkt oder Verbindungspunkt untereinander aufweisen,
- die Transportpalette in jedem Eckbereich ein Eckeinstellfach (11) aufweist, das einen teilweise umlaufende Fassungsrand (10) und mindestens drei Wandstreben (8) hat, wobei der Fassungsrand (10) die kreisförmige Öffnung des Eckeinstellfachs (11) zu mindestens 2/3 umgibt, bevorzugt zu mehr als ¾ der kreisförmigen Öffnung und
- zwischen zwei Eckeinstellfächern (11) immer mindestens ein Seiteneinstellfach (12, 13) angeordnet ist und mindestens ein zentrales Einstellfach (14) in der Mitte der Transportpalette zwischen den Seiteneinstellfächern (12, 13) angeordnet ist.

5. Transportpalette (1) gemäß Anspruch 4, **dadurch gekennzeichnet, dass** die Transportpalette (1) an ihren Kurzseiten jeweils ein erstes Seiteneinstellfach (12) aufweist, das zwischen den beiden Eckeinstellfächern (11) angeordnet ist und das erste Seiteneinstellfach (12) einen halbkreisförmig umlaufenden Fassungsrand (10) hat, der zum Außenrand der Grundplatte (2) orientiert ist und das Seiteneinstellfach (12) zur Mitte gerichtet geöffnet ist

6. Transportpalette (1) gemäß einem der Ansprüche 4 oder 5, **dadurch gekennzeichnet, dass** die Transportpalette (1) an ihren Längsseiten jeweils ein zweites Seiteneinstellfach (13) aufweist, das zwischen den beiden Eckeinstellfächern (11) angeordnet ist und
- das zweite Seiteneinstellfach (13) einen Boden (5) hat, der in seiner Form drei einander überlagernden Kreisen entspricht, wobei die Mittelpunkte der Kreise auf einer Geraden liegen, die parallel zum Längsseitenrand der Grundplatte (2) verläuft,
- das zweite Seiteneinstellfach (13) im Bereich der beiden äußeren Kreise einen zumindest halbkreisförmig umlaufenden Fassungsrand (10) hat, der jeweils zum benachbarten Eckeinstellfach (11) orientiert ist und
- das zweite Seiteneinstellfach (13) mindestens zwei Standstreben (9) aufweist, die auf der zur Mitte orientierten Seite des zweiten Seiteneinstellfachs (13) jeweils auf dem Kreisradius der sich überlagerndenden Kreise im Schnittpunkt zweier Kreise und/oder unmittelbar benachbart zu diesem Schnittpunkt angeordnet sind, wobei eine Standstrebe (9) vom Boden (5) zu einer Oberseite verläuft und die Oberseite bevorzugt eine Verbindungsplatte (16) ist, die ein Flächenelement in einer Ebene parallel zum Boden (5) ist, bevorzugt in einer Ebene mit der Grundplatte (2) ist.

7. Transportpalette (1) gemäß einem der Ansprüche 4 bis 6, **dadurch gekennzeichnet, dass** im Mittelbereich der Grundplatte (2) ein Mitteleinstellfach angeordnet ist, das die beiden ersten Seitenfächer (12) miteinander verbindet.

8. Transportpalette (1) gemäß Anspruch 7, **dadurch gekennzeichnet, dass** das Mitteleinstellfach (14) die beiden ersten Seitenfächer (12) und die beiden zweiten Seitenfächer (13) mit einander verbindet und zu allen vier Seiteneinstellfächern geöffnet ist.

9. Transportpalette (1) gemäß einem der Ansprüche 7 oder 8, **dadurch gekennzeichnet, dass** der Boden (5) des Mitteleinstellfachs (14) von mehreren Bodenstreben (6) gebildet wird und die mittlere Bodenstrebe (17) bevorzugt auf der Mittelachse des Mitteleinstellfachs (14), besonders bevorzugt auf der Mittelachse der Grundplatte (2) verläuft und die Querstreben des Mitteleinstellfachs (14) besonders bevorzugt in einem Winkel von 45° bis 90° zur Mittelachse verlaufen und mit der Mittelstrebe (17) verbunden sind.

10. Transportpalette (1) gemäß einem der Ansprüche 4 bis 9, **dadurch gekennzeichnet, dass** die vier Eckeinstellfächer (11) in den Eckbereichen alle den gleichen Durchmesser haben.

11. Transportpalette (1) gemäß einem der Ansprüche 4 bis 10, **dadurch gekennzeichnet, dass** der Boden (5) der Eckeinstellfächer (11) in den Eckbereichen durch mindestens zwei miteinander verbundene Bodenstreben (6) gebildet ist, besonders bevorzugt durch mindestens 4 sternförmig angeordnete Bodenstreben (6), wobei der Verbindungspunkt (7) der Streben dem Mittelpunkt des kreisförmigen Bodens (5) entspricht.

12. Transportpalette (1) gemäß einem der Ansprüche 4 bis 11, **dadurch gekennzeichnet, dass** die Eckeinstellfächer (11) einen umlaufenden Rand (15) am Boden mit kreisförmiger Umfang aufweisen, der mit den Bodenstreben (6) und den Wandstreben (8) verbunden ist.
